Europäisches Patentamt

European Patent Office

Office européen des brevets

(11) Veröffentlichungsnummer: **0 137 535**
**B1**

(12) **EUROPÄISCHE PATENTSCHRIFT**

(45) Veröffentlichungstag der Patentschrift:
27.09.89

(21) Anmeldenummer: 84201231.2

(22) Anmeldetag: 28.08.84

(51) Int. Cl.⁴: **C 23 F 11/10,** C 09 D 5/08,
**B 05 D 7/14**

(54) Verwendung von natürlichem oder modifiziertem Kolophonium.

(30) Priorität: 31.08.83 DE 3331317

(43) Veröffentlichungstag der Anmeldung:
17.04.85 Patentblatt 85/16

(45) Bekanntmachung des Hinweises auf die Patenterteilung:
27.09.89 Patentblatt 89/39

(84) Benannte Vertragsstaaten:
BE DE GB NL

(56) Entgegenhaltungen:
EP-A- 0 127 241
AT-B- 135 678
DD-A- 148 193
DE-A- 2 701 927
DE-A- 3 001 882
DE-C- 858 119
US-A- 2 928 948
US-E- 22 065

(73) Patentinhaber: **Röhr + Stolberg GmbH, Bruchfeld 52,
D-4150 Krefeld-Linn (DE)**

(72) Erfinder: **Sandig, Hartmut, Dr., Hostetstrasse 144,
D-5190 Stolberg (DE)**
Erfinder: **Schömer, Martin, Vaalser Strasse 287,
D-5100 Aachen (DE)**

(74) Vertreter: **Rieger, Harald, Dr., Reuterweg 14,
D-6000 Frankfurt a.M. (DE)**

ACTORUM AG

**Beschreibung**

Die Erfindung betrifft die Verwendung von natürlichem oder modifiziertem Kolophonium.

Die hohe Korrosionsbeständigkeit gegenüber normaler Atmosphäre, des ästhetisch befriedigende Aussehen sowie die gute Verarbeitbarkeit aufgrund der großen Duktilität haben Bleibleche und -bänder zu einem ausgezeichneten und vielseitigen erprobten Werkstoff für das Bauwesen gemacht. Wenn Bleibleche und -bänder der normalen Atmosphäre ausgesetzt sind, bilden sie zunächst eine Deckschicht aus Oxid und dann durch Reaktion mit dem atmosphärischen Kohlendioxid eine Patina aus Bleicarbonat. Dieser sogenannte Edelrost ist stark haftend sowie in normaler Luftfeuchtigkeit unlöslich und verleiht in sauberer Atmosphäre den angewitterten Bleiblechen und -bändern ein silbergraues bis schiefergraues Aussehen einheitlicher Farbtönung, das allgemein als ästhetisch befriedigend anerkannt ist.

Bei Bewitterung in feuchter Atmosphäre mit ungenügendem Angebot an Kohlendioxid im Wasser können sich jedoch die Schutzschichten aus Bleicarbonat nur ungenügend ausbilden. Sie haften schlecht und werden von Regenwasser abgeschwemmt, so daß die Bauwerke verunreinigt werden können. Auch wird die Ausbildung der gewünschten, eine einheitliche metallisch-graue Farbtönung aufweisenden Bleicarbonatschichten auf der Oberfläche von Bleiblechen und -bändern zunächst erheblich gestört.

Um das zu vermeiden, ist es bekannt, Bleibleche und -bänder mit einer Schutzschicht aus schnell trocknendem sogenannten Patinationsöl auf Wachsbasis zu versehen. Dadurch wird die Oxidation und damit die Ausbildung von Edelrost in die gewünschte, einheitliche metallisch-graue Farbtönung gesteuert. Von Nachteil ist jedoch, daß sich die Bleibleche und -bänder wegen der Haftwirkung der Wachsschicht nicht ohne entsprechende Gegenmaßnahmen stapeln bzw. aufwickeln lassen. Darüber hinaus behindert die Wachsschicht das Benetzen der Oberflächen der miteinander zu verbindenden Bleibleche bzw. -bänder mit flüssigem Lot. Ferner sind die Fügestellen nach dem Löten nicht vor dem Zutritt der Atmosphäre vollständig geschützt, so daß bereits nach relativ kurzer Zeit die unerwünschte Bildung von Bleicarbonat durch Primärkorrosion mit schlechter Haftung in den an die Lötnaht angrenzenden Bereichen auftritt.

In der Elektrotechnik und Elektronik ist die Verwendung von modifiziertem, die Korrosion verhinderndem Kolophonium als Flußmittel mit Schutzwirkung nach dem Löten allerdings mit stark klebender Wirkung bekannt (DD-A-148 193).

Die AT-B-135 678 beschreibt ein Verfahren zum Schutz von Blei gegen Korrosion durch Auftragen einer Paste, die Schwefel oder natürliche oder künstliche Schwefelverbindungen in solcher Menge enthält, daß sich eine Schutzschicht aus Bleisulfid bildet.

Es ist die Aufgabe der Erfindung, der Atmosphäre ausgesetzte Bleibleche und -bänder mit solchen Überzügen zu versehen, die die Bildung von durch Primärkorrosion entstehenden, schlecht haftenden weißen basischen Bleicarbonatschichten verhindern und die Bildung von eine einheitliche metallisch-graue Farbtönung aufweisenden festhaftenden Bleicarbonatschichten gewährleisten sowie das Stapeln der Bleibleche bzw. das Aufwickeln der Bleibänder ohne klebende Wirkung zulassen.

Gelöst ist diese Aufgabe durch die Verwendung von natürlichem oder modifiziertem Kolophonium zur Herstellung der Überzüge. Die lackartigen Überzüge, die durch die Einwirkung der Atmosphäre im Laufe der Zeit langsam abgebaut werden, sind bei den üblichen Außentemperaturen auch unter Berücksichtigung der Sonnenbestrahlung fest und bewirken bei ihrem langsamen Abbau einen langsamen Aufbau von metallisch-grauen, fest haftenden Bleicarbonatschichten. Beim Löten der Bleibleche bzw. -bänder schützt der Überzug die Lötstelle und das Lot gegen Oxidation und wirkt gleichzeitig als Flußmittel, das die Grenzflächenspannung optimal herabsetzt. Nach dem Lötvorgang erstarrt das Kolophonium und übernimmt auch im Bereich der Lötstelle die vorgenannte Schutzfunktion.

Das in Lösungsmitteln, wie Alkoholen, Brennspiritus, gelöste Kolophonium und die natürlichen Öle werden auf die Bleibleche und -bänder durch Sprühen, Walzen oder Tauchen bei Raumtemperatur aufgetragen.

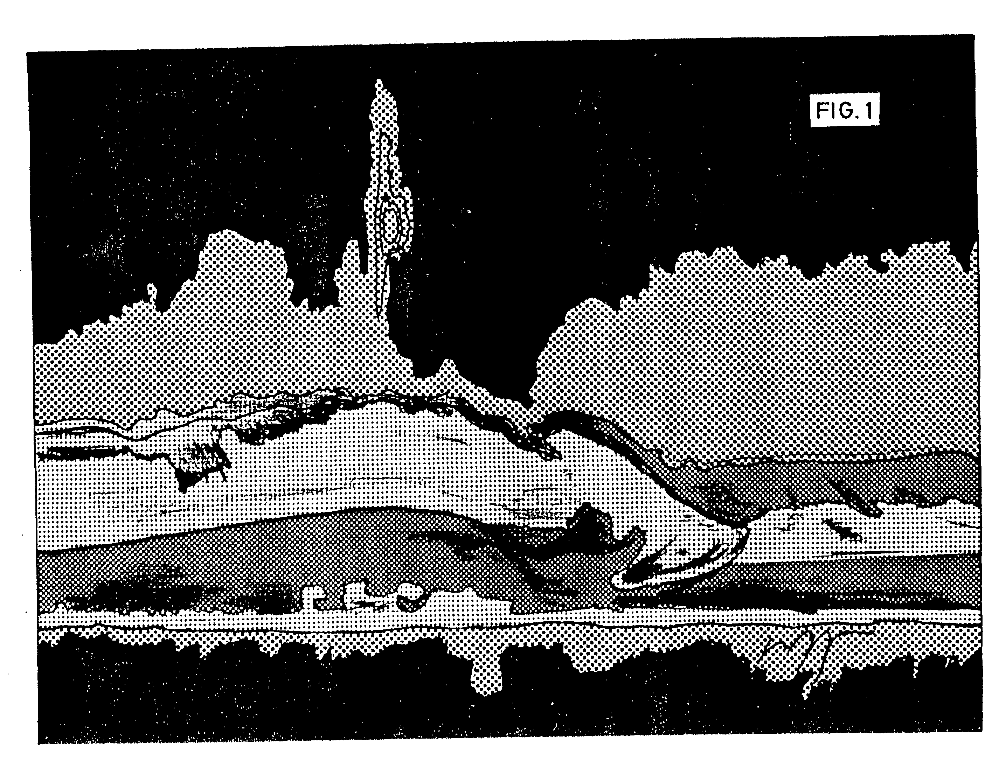

Die in der Zeichnung wiedergegebenen, eine etwa siebenfache Vergrößerung besitzenden Fotos zeigen in Fig. 1 einen Ausschnitt einer Lötnaht von zwei mit einer durch den Auftrag von Patinationsöl gebildeten Wachsschutzschicht überzogenen Bleiblechen. Im Randbereich der Lötnaht ist die Wachsschutzschicht zerstört und das durch Primärkorrosion gebildete Bleicarbonat vorhanden.

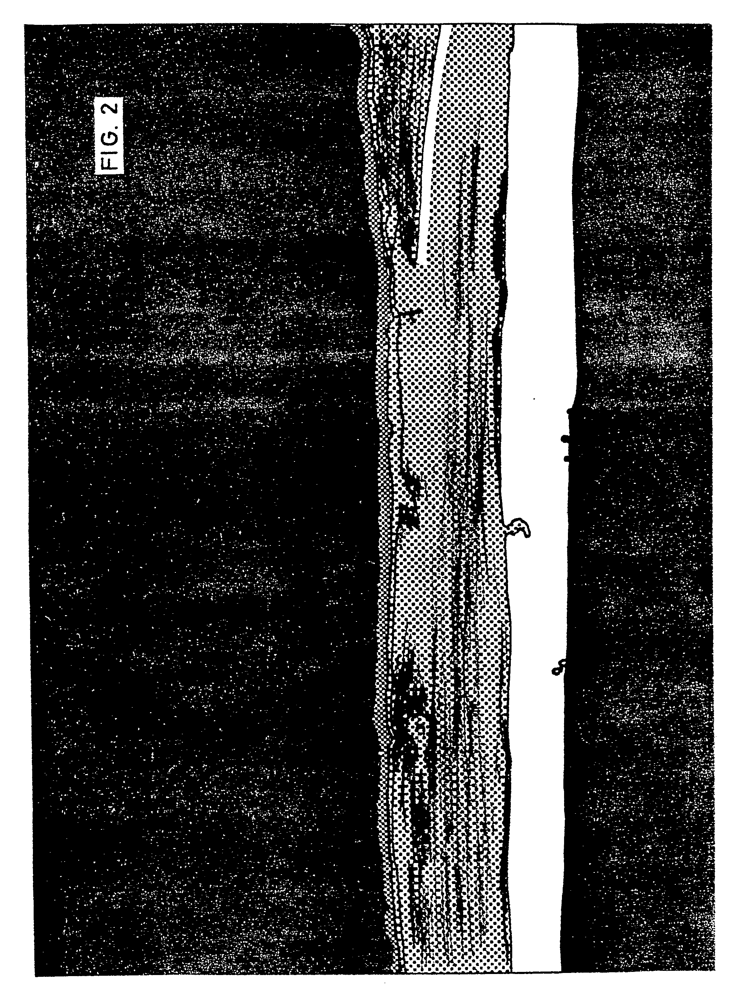

Bei dem in Fig. 2 dargestellten Ausschnitt verbindet die Lötnaht zwei Bleibleche, die mit einem Überzug auf der Basis von Kolophonium beschichtet sind. Der Überzug ist im Bereich der Lötnaht nicht zerstört, so daß eine Primärkorrosion zu Bleicarbonat nicht eingesetzt hat.

Der mit der Erfindung erzielte Vorteil besteht insbesondere darin, daß die Überzüge einen ausgezeichneten Schutz für Bleibleche und -bänder gegen die sich durch Primärkorrosion bildenden weißen Bleicarbonatschichten darstellen und darüber hinaus als Flußmittel während der Herstellung der Lötverbindung dienen.

**Patentansprüche**

1. Verwendung von natürlichem oder modifiziertem Kolophonium zur Herstellung von Überzügen auf der Atmosphäre ausgesetzten Bleiblechen und -bändern.

2. Verfahren zur Herstellung der Überzüge für die Verwendung nach Anspruch 1, dadurch gekennzeichnet, daß die Bleibleche und -bänder in organische Lösungen von natürlichem oder modifiziertem Kolophonium eingetaucht oder mit den Lösungen besprüht oder gewalzt werden.

## Claims

1. Use of natural or modified rosin to produce coatings on lead sheets and strips which are exposed to the atmosphere.

2. Process for producing the coatings for the use according to Claim 1, characterised in that the lead sheets and strips are dipped into organic solutions of natural or modified rosin or are sprayed or rolled with the solutions.

## Revendications

1. Utilisation de colophane naturelle ou modifiée pour la réalisation de revêtements sur des tôles et des feuillards de plomb exposés à l'atmosphère.

2. Procédé pour la réalisation des revêtements destinés à être utilisés selon la revendication 1, caractérisé en ce qu'on plonge les tôles et les feuillards de plomb dans des solutions organiques de colophane naturelle ou modifiée ou en ce que ces solutions y sont pulvérisées ou appliquées au rouleau.

FIG. 1

FIG. 2